# EUROPÄISCHE PATENTANMELDUNG

(11) **EP 2 112 527 A2**
(43) Veröffentlichungstag der Anmeldung: **28.10.2009**
(21) Anmeldenummer: 09450085.7
(22) Anmeldetag: 22.04.2009
(51) Int. Cl.: G01S 7/497

(54) **Referenzziel zur Kalibrierung von Laserscannern**

(30) Priorität: 22.04.2008 AT 6372008
(71) Anmelder: Riegl Laser Measurement Systems GmbH, 3580 Horn (AT)
(72) Erfinder: Ullrich, Andreas, 3003 Gablitz (AT); Reichert, Rainer, 3580 Horn (AT)
(74) Vertreter: Weiser, Andreas

(57) **Zusammenfassung**

Referenzziel (1) zur Kalibrierung von Laserscannern (2), mit einer den auftreffenden Laserstrahl (7) U-förmig zurücklenkenden Spiegelkonstruktion (9, 10), deren Reflektivität sich in Scanrichtung (8) des Laserstrahls (7) ändert.

## Beschreibung

Die vorliegende Erfindung betrifft ein Referenzziel zur Kalibrierung von Laserscannern. Die Erfindung betrifft ferner einen Laserscanner mit einem solchen Referenzziel.

Referenzziele werden in Laserscannern eingesetzt, um im Zuge des Scannens bzw. Abtastens des Laserstrahls über einen bestimmten Scanwinkelbereich auch das Referenzziel zu überstreichen und aus der bekannten Entfernung und dem bekannten Ort des Referenzziels Referenzdaten für die Kalibrierung des Laserscanners zu erhalten.

Die Erfindung setzt sich zur Aufgabe, eine neuartige Form von Referenzziel zu schaffen, mit welchem zusätzliche Kalibrierungsdaten erhalten werden können. Diese Aufgabe wird mit einem Referenzziel der genannten Art gelöst, welches sich durch eine den auftreffenden Laserstrahl U-förmig zurücklenkende Spiegelkonstruktion auszeichnet, deren Reflektivität sich in Scanrichtung des Laserstrahls ändert.

Auf diese Weise können Referenzdaten für die Kalibrierung des Laserscanners nicht nur aus dem bekannten Ort und der bekannten Entfernung des Referenzziels gewonnen werden, sondern auch aus der Leistung bzw. Amplitude des reflektierten Laserstrahls selbst, welche sich im Verlauf der Scanbewegung des Laserstrahls gemäß der variierenden Reflektivität des Referenzziels ändert. Damit können z.B. bei einem gepulsten Laserstrahl Referenz-Laserimpulse mit sich definiert ändernder Amplitude erhalten werden, welche für vielfältige Kalibrierungszwecke eingesetzt werden können.

Eine bevorzugte Anwendung des Referenzziels der Erfindung ist beispielsweise die Generierung von Referenzimpulsen unterschiedlicher Amplitude für ein Verfahren zum Messen des Empfangszeitpunkts eines Laserimpulses, wie es in der Parallelanmeldung derselben Anmelderin, beruhend auf derselben Prioritätsanmeldung A 637/2008 vom 22. April 2008, offenbart ist und hier durch Bezugnahme aufgenommen wird.

In einer ersten bevorzugten Ausführungsform der Erfindung wird die sich in Scanrichtung ändernde Reflektivität dadurch erreicht, daß die Spiegelkonstruktion ein sich in Scanrichtung änderndes Abschwächmittel enthält. Das Abschwächmittel kann beispielsweise ein optisches Filter mit variierendem Schwärzungsgrad sein.

In einer alternativen, besonders bevorzugten Ausführungsform der Erfindung wird die sich ändernde Reflektivität erreicht, indem die Spiegelkonstruktion zumindest eine sich in Scanrichtung des Laserstrahls verändernde Blende aufweist. Diese Ausführungsform beruht auf dem Umstand, daß jeder Laserstrahl einen Strahlquerschnitt hat, über den sich seine Intensität verteilt, sodaß das Ausblenden eines Teils des Laserstrahlquerschnitts durch eine Blende, z.B. Schlitzblende, zu einer Verringerung der reflektierten Leistung führt. Diese Ausführungsform ermöglicht eine besonders kostengünstige Fertigung.

Besonders vorteilhaft ist es, wenn sich die Blende in Scanrichtung keilförmig verjüngt, sodaß beim Überstreichen des Referenzziels ein reflektierter Laserstrahl fortschreitend zu- oder abnehmender Leistung erhalten wird.

Gemäß einer weiteren bevorzugten Ausführungsform der Erfindung ist die Spiegelkonstruktion aus totalreflektierenden Umlenkprismen zusammengesetzt, welche auf zumindest einer ihrer Strahldurchtrittsflächen das genannte Abschwächmittel oder die genannte Blende tragen, was eine robuste, einfach zu fertigende Ausführung ergibt.

In einem zweiten Aspekt schafft die Erfindung einen Laserscanner mit einem Laserstrahl, der einen Scanwinkelbereich überstreicht und sich durch ein innerhalb des überstrichenen Scanwinkelbereichs liegendes Referenzziel der hier vorgestellten Art auszeichnet.

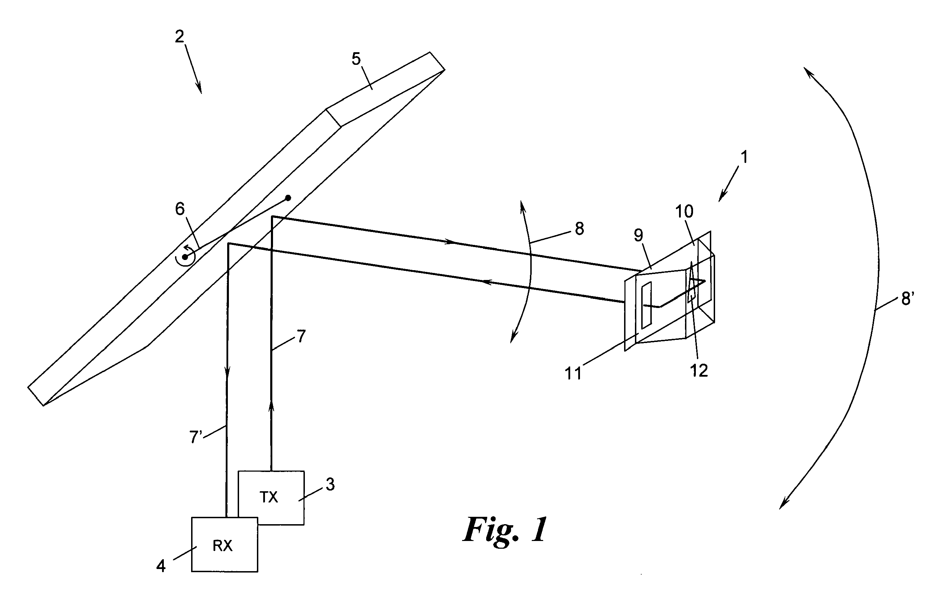

Die Erfindung wird nachstehend anhand eines in den beigeschlossenen Zeichnungen dargestellten Ausführungsbeispiels näher erläutert. Die einzige Fig. 1 der Zeichnung zeigt das Referenzziel der Erfindung in einer Perspektivansicht in Verbindung mit einem schematisch dargestellten Laserscanner.

Fig. 1 zeigt ein Referenzziel 1, das zur Kalibrierung eines Laserscanners 2 dient, von dem nur die wichtigsten Komponenten schematisch dargestellt sind. Der Laserscanner 2 umfaßt einen Lasersender 3, einen Laserempfänger 4 und einen Abtast- bzw. Scanspiegel 5, welcher um eine Achse 6 dreh- oder schwenkbar ist. Der vom Lasersender 3 ausgesandte Laserstrahl 7 wird vom Scanspiegel 5 auf das Referenzziel 1, von diesem zurück auf den Scanspiegel 5 und von dort wieder zurück zum Laserempfänger 4 umgelenkt.

Durch Verschwenken oder Rotieren des Scanspiegels 5 um die Achse 6 überstreicht der Laserstrahl 7 in einer Scanrichtung 8 einen entsprechenden Scanwinkelbereich 8', innerhalb dessen das Referenzziel 1 liegt, z.B. am Rande des Scanwinkelbereichs 8'.

Der Lasersender 3 und der Laserempfänger 4 haben systembedingt einen geringfügigen Parallelversatz. Das Referenzziel 1 ist zu diesem Zweck eine den Laserstrahl 7 U-förmig zurücklenkende Spiegelkonstruktion, beispielsweise aus zwei entsprechend beabstandeten 90°-Umlenkspiegeln oder - wie im gezeigten Beispiel - aus zwei totalreflektierenden Umlenkprismen 9, 10 zusammengesetzt.

Die Reflektivität des Referenzziels 1 ändert sich in Scanrichtung 8, was durch verschiedene Maßnahmen erreicht werden kann. So ist es möglich, zumindest eine der Strahldurchtrittsflächen des Referenzziel 1, hier dessen Vorderseite 11, mit einem sich in Scanrichtung 8 ändernden Abschwächmittel zu versehen, beispielsweise einer sich graduell ändernden Schwärzung. Eine alternative (oder zusätzliche) bevorzugte Möglichkeit ist es, das Referenzziel 1 mit zumindest einer sich in Scanrichtung 8 verändernden Blende 12 zu versehen. Die Blende 12 ist im gezeigten Beispiel eine Schlitzblende, die sich keilförmig in Scanrichtung 8 verjüngt, auf der Vorderseite 11 der Prismenkonstruktion 9, 10 liegt und dort einen dreieckigen Strahldurchtritt beläßt. Sowohl die Ein- als auch die Austrittsfläche der Vorderseite 11 könnte mit einer solchen Blende 12 versehen werden; diese könnte alternativ auch zwischen den durch die Umlenkprismen 9, 10 geschilderten Umkehrspiegeln liegen.

Beim Verschwenken bzw. Scannen des Laserstrahls 7 in Scanrichtung 8 empfängt der Laserempfänger 4 daher bei konstanter Ausgangsleistung des Lasersenders 3 einen sich sukzessive in seiner Leistung bzw. Amplitude ändernden reflektierten Laserstrahl 7'. Wenn der Laserstrahl 7 gepulst ist, können so auch Laserimpulse 7' mit fortschreitend ab- oder zunehmender Amplitude bzw. Leistung für den Laserempfänger 4 erzeugt werden, welche z.B. als Referenzimpulse dienen können, um den Laserscanner 2 auf Empfangssignale unterschiedlicher Amplitude zu kalibrieren.

Die Erfindung ist nicht auf die dargestellten Ausführungsformen beschränkt, sondern umfaßt alle Varianten und Modifikationen, die in den Rahmen der angeschlossenen Ansprüche fallen.

## Patentansprüche

1. Referenzziel (1) zur Kalibrierung von Laserscannern (2), **gekennzeichnet durch** eine den auftreffenden Laserstrahl (7) U-förmig zurücklenkende Spiegelkonstruktion (9, 10), deren Reflektivität sich in Scanrichtung (8) des Laserstrahls (7) ändert.

2. Referenzziel nach Anspruch 1, **dadurch gekennzeichnet, daß** die Spiegelkonstruktion (9, 10) ein sich in Scanrichtung (8) änderndes Abschwächmittel enthält.

3. Referenzziel nach Anspruch 1, **dadurch gekennzeichnet, daß** die Spiegelkonstruktion (9, 10) zumindest eine sich in Scanrichtung (8) des Laserstrahls (7) verändernde Blende (12) aufweist.

4. Referenzziel nach Anspruch 3, **dadurch gekennzeichnet, daß** sich die Blende (12) in Scanrichtung (8) keilförmig verjüngt.

5. Referenzziel nach einem der Ansprüche 2 bis 4, **dadurch gekennzeichnet, daß** die Spiegelkonstruktion aus totalreflektierenden Umlenkprismen (9, 10) zusammengesetzt ist, welche auf zumindest einer ihrer Strahldurchtrittsflächen (11) das genannte Abschwächmittel oder die genannte Blende (12) tragen.

6. Laserscanner (2) mit einem Laserstrahl (7), der einen Scanwinkelbereich (8') überstreicht, **gekennzeichnet durch** ein innerhalb des überstrichenen Scanwinkelbereich (8') liegendes Referenzziel (1) nach einem der Ansprüche 1 bis 5.
